# EUROPEAN PATENT SPECIFICATION

(11) **EP 0 569 594 B1**
(45) Date of publication and mention of the grant of the patent: **08.01.1997**
(21) Application number: 92921819.6
(22) Date of filing: 21.10.1992
(51) Int. Cl.: H02K 1/27

(54) **ROTOR OF SYNCHRONOUS ROTATING MACHINE**
ROTOR SYNCHRONER DREHMASCHINEN
ROTOR DE MACHINE ROTATIVE SYNCHRONE

(30) Priority: 29.11.1991 JP 316225/91
(43) Date of publication of application: 18.11.1993
(73) Proprietor: FANUC LTD., Minamitsuru-gun, Yamanashi 401-05 (JP)
(72) Inventor: UCHIDA, Hiroyuki Fanuc Mansion Harimoni 7-107, Minamitsuru-gun Yamanashi 401-05 (JP); OKAMOTO, Takashi Fanuc Dai-3 Vira-karamatsu, Minamitsuru-gun Yamanashi 401-05 (JP)
(74) Representative: Otte, Peter, Dipl.-Ing.
(86) International application number: JP9201368
(87) International publication number: WO9311596

(56) References cited:
- GB-A- 2 217 924
- JP-A-63 213 442
- JP-U-57 052 783
- JP-U-57 052 784
- JP-U-61 017 876
- JP-U-61 180 579
- JP-U-61 202 166
- JP-U-63 120 568
- US-A- 4 642 502
- PATENT ABSTRACTS OF JAPAN vol. 9, no. 284 (E-357)(2007) 12 November 1985 & JP-A-60 125 149
- PATENT ABSTRACTS OF JAPAN vol. 7, no. 107 (E-174)(1252) 11 May 1983 & JP-A-58 029 359
- PATENT ABSTRACTS OF JAPAN vol. 14, no. 297 (E-945)(4240) 27 June 1990 & JP-A-02 095 150

## Description

### TECHNICAL FIELD

The present invention relates to the construction of a rotor for a synchronous rotary machine, particularly, for a synchronous electric motor, which includes a rotor core mounted on a rotatably supported shaft so as to serve as a yoke and having a substantially cylindrical circumference, and permanent magnets fixedly arranged on the circumference of the rotor core so as to interact with a rotating magnetic field created by a stator to thereby generate an output torque, the rotor further incorporating an improvement for preventing the separation of the permanent magnets from the rotor core. The present invention also relates to a method of fabricating such a rotor.

### BACKGROUND ART

Most synchronous rotary machines, particularly, synchronous electric motors, employ either a radial magnet type rotor formed by alternately and contiguously arranging rotor cores serving as yokes, and permanent magnet pieces along a circumferential direction or a surface-mounted magnet type rotor formed by attaching a plurality of permanent magnet pieces on the outer circumference of a cylindrical rotor core.

The plurality of permanent magnets of the latter of these two types of rotors for synchronous rotating machines, in general, are attached adhesively with an adhesive to the substantially cylindrical circumference of the rotor core. The adhesive strength of the adhesive must exceed the resultant centrifugal force that acts on the permanent magnets when the rotor rotates and the magnetic attraction resulting from the interactions of a rotating magnetic field created by the stator and magnetic fields created by the permanent magnets to prevent the separation of the permanent magnets from the circumference of the rotor core even when the rotor rotates for a long time under the action of the centrifugal force and the magnetic attraction. Accordingly, to ensure that the permanent magnets are securely held on the rotor, the bottom portions of the permanent magnets are partly sunk in recesses formed in the outer circumferences of the rotor core so that the permanent magnets are held at their side surfaces by the rotor core when adhesively attaching the permanent magnets to the outer circumference of the rotor core.

JP-A-63-213442 as well as GB-A-2 217 924 disclose a rotor for a synchronous rotary machine, supported for a rotation inside a stator and provided with a substantially cylindrical rotor core having an outer circumference thereof to which a plurality of pieces of permanent magnet pieces are fixedly attached. Each of these permanent magnet pieces is formed in a polygonal shape piece having flat, axially opposite end faces parallel to a plane perpendicular to the axis of rotation of the rotor, side faces each intersecting the opposite end faces, curved upper and lower faces formed so as to have a curvature substantially in conformity with that of the outer circumference of the cylindrical rotor core, the lower surface having a wide greater than that of the upper surface so that the side faces connecting the upper and lower surfaces are inclined so as to diverge from each other toward the lower surface. The cylindrical rotor core is provided with a surface thereof formed with a plurality of substantially dovetail-groove-like recesses, each having an axially and cylindrically extending bottom surface and opposite inclined side faces diverging from each other toward the bottom surface, so that gaps are formed between the inclined side faces of the recess and the inclined side faces of the permanent magnet piece, when the lower surface of the permanent magnet piece is radially fitted in the recess. The plurality of dovetail-groove-like recesses being circumferentially arranged at a predetermined angular intervals.

However, the insertion of such permanent magnet pieces is very complicated because it is not possible to radially inserting the magnet pieces in the recesses. Moreover, each permanent magnet piece disclosed in JP-A-63-213442 as well as in GB-A-2 217 924 is arranged completely inside of its resp. recess of the rotor core. This is very disadvantageous to the cooling of the rotor core. On the other side, if the permanent magnet pieces are not arranged completely inside of its resp. recess of the rotor core, the fastening of the permanent magnet pieces is very problematically.

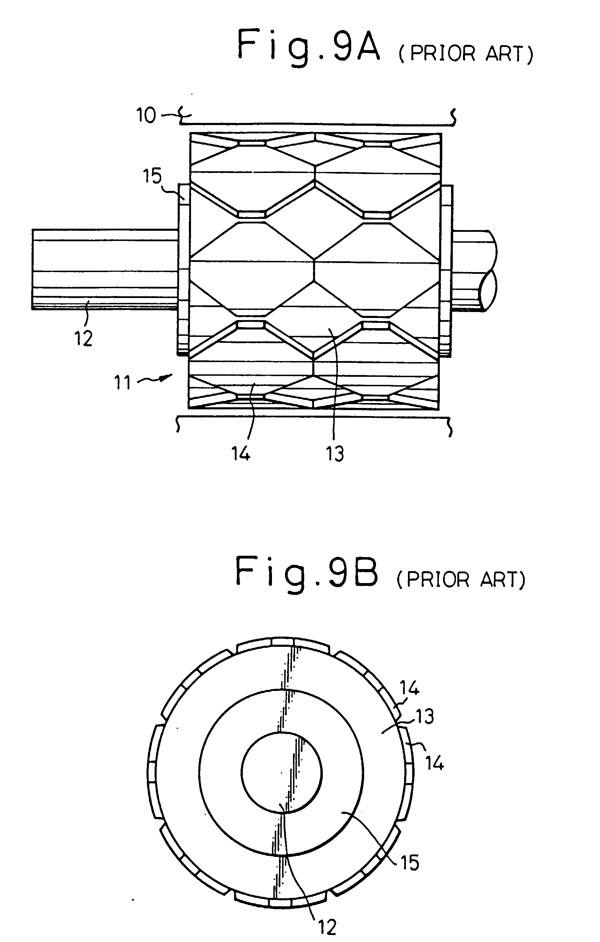

Figs. 9A and 9B show a further construction of a typical surface-mounted magnet type rotor for a conventional synchronous electric motor, in which permanent magnets are held securely on the rotor core solely by the adhesive strength of an adhesive. Figs. 9A and 9B are a front view and a side view, respectively, of the surface-mounted magnet type rotor. Referring to Figs. 9A and 9B, a rotor 11 supported for rotation within a stator 10 with a gap between the outer circumference thereof and the cylindrical inner circumference of the stator 10 comprises a rotor shaft 12, a cylindrical rotor core 13 fixedly mounted on the rotor shaft 12, a plurality of permanent magnets 14 having the shape of a modified octagon attached by adhesive at their bottom surface to the outer circumference of the cylindrical rotor core 13, ends of the rotor core 13 to hold the rotor core in place on the rotor shaft 12. As mentioned above, the permanent magnets 14 of this typical surface-mounted magnet type rotor are secured to the rotor core 13 solely by the adhesive strength of the adhesive, which is not a sufficiently effective measure to prevent the separation of the permanent magnets 14 from the rotor core 13.

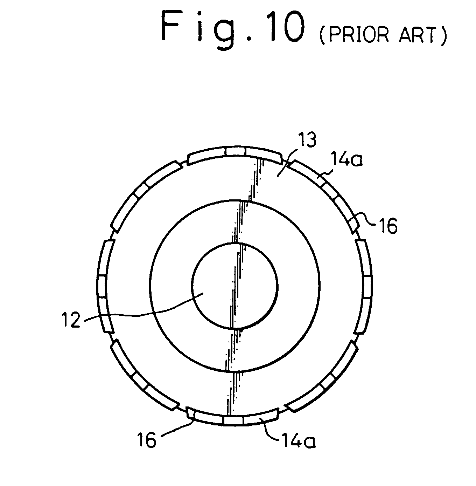

Fig. 10 is a side view, corresponding to Fig. 9B, of a rotor having permanent magnets partly sunk in recesses formed in the outer circumference of a rotor core. As is obvious from the comparison of the constructions shown in Figs. 9B and 10, the construction shown in Fig. 10 is more effective in preventing separation than the construction shown in Fig. 9B. As shown in Fig. 10, a rotor core 13 is provided in its outer circumference with axial dovetail grooves 16, and permanent magnets 14a having the shape of a curved plate and formed in a shape complementary to that of the dovetail grooves 16 and having an upper surface, a lower surface of a width greater than that of the upper surface, and side surfaces extending outward so as to approach each other and inserted in the dovetail grooves 16. When assembling the rotor core 13 and the permanent magnets 14a, the permanent magnets 14a need necessarily to be inserted axially of the rotor core 13 in the dovetail grooves 16 and positioned in place with respect to the axial direction.

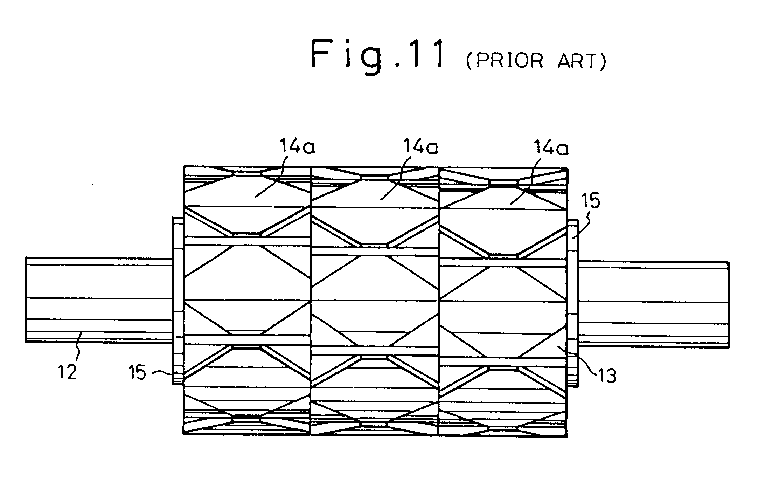

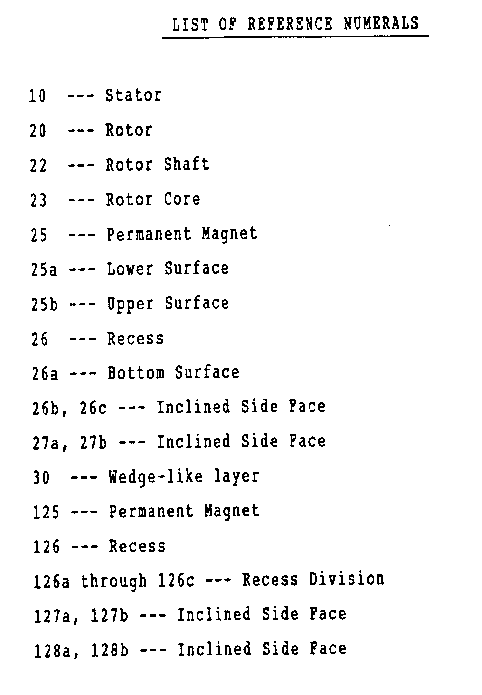

Accordingly, when as shwon in Fig. 11, the rotor is provided with a plurality of permanent magnets 14a divided into a plurality of groups (three groups in Fig. 11) and the groups of permanent magnets 14a are arranged respectively in a plurality of axial divisions (three axial divisions in Fig. 11) on the outer circumference of the rotor core 13 with the angular position of the permanent magnets 14a of each group shifted relative to that of the permanent magnets 14a of other groups to suppress torque ripple, it is impossible to insert the permanent magnets 14a of the middle group axially in the corresponding dovetail grooves 16 of the rotor core 13.

### DISCLOSURE OF THE INVENTION

Accordingly, a principal object of the present invention is to solve the foregoing problems in the rotor of the conventional synchronous rotary machine, particularly, in the surface-mounted magnet type rotor.

A further object of the present invention is to provide a surface-mounted magnet type rotor comprising a rotor core, and permanent magnets attached substantially to the outer circumference of the rotor core, such that, on the one hand they are fixedly attached to the rotor core and on the other hand a very effective cooling of the rotor core is made possible.

Another object of the present invention is to provide a surface-mounted magnet type rotor comprising a rotor core, and permanent magnets attached substantially to the outer circumference of the rotor core, capable of being assembled by assembling processes as simple as those for assembling the conventional surface-mounted magnet type rotor without requiring additional assembling work, and having a construction having a mechanical fastening strength capable of securely holding the permanent magnets on the rotor core so that the permanent magnets are not separated from the surface of the rotor core by the centrifugal force generated by the rotation of the rotor and the magnetic attraction resulting from the magnetic interactions of the stator magnetic field created by the stator, and the permanent magnets and that additionally a very effective cooling of the rotor core 13 is achieved.

A further object of the present invention is to provide a method of fabricating a surface-mounted magnet type rotor for a synchronous rotary machine, having a rotor core provided with recesses in its outer circumference, and permanent magnets fitted in the recesses of the rotor core by radially fitting the permanent magnets in the recesses of the rotor core like tiling a surface.

In view of the foregoing object of the present invention, when fabricating the surface-mounted magnet type rotor for a synchronous rotary machine, each permanent magnet is inserted radially in the recess formed in the substantially cylindrical surface of the rotor core. Each recess and each permanent magnet are formed so that wedging spaces are formed on the opposite sides of the permanent magnet between the side faces of the permanent magnet and walls demarcating the recess, and wedge-like layers of an adhesive are formed in the wedging spaces to secure the permanent magnet in place against the resultant of the centrifugal force generated by the rotation of the rotor and the magnetic attraction resulting from magnetic interactions of magnetic fields created by the stator, and the permanent magnet, that tends to separate the permanent magnet from the rotor core.

In accordance with the present invention there is provided a
rotor for a synchronous rotary machine, supported for a rotation inside a stator and provided with a substantially cylindrical rotor core having an outer circumference thereof to which a plurality of pieces of permanent magnet pieces are fixedly attached, wherein
each of said permanent magnet pieces is formed in a polygonal shape piece having flat, axially opposite end faces parallel to a plane perpendicular to the axis of rotation of said rotor, side faces each intersecting the opposite end faces, curved upper and lower surfaces formed so as to have a curvature substantially in conformity with that of said outer circumference of said cylindrical rotor core, said lower surface having a width greater than that of said upper surface so that said side faces connecting said upper and lower surfaces are inclined so as to diverge from each other toward said lower surface,
wherein said cylindrical rotor core is provided with a surface thereof formed with a plurality of substantially dovetail-groove-like recesses each having an axially and cylindrically extending bottom surface and opposite inclined side faces diverging from each other toward said bottom surface so that gaps are formed between said inclined side faces of said recess and said inclined side faces of said permanent magnet piece when said lower surface of said permanent magnet piece is radially fitted in said recess, said plurality of dovetail-groove-like recesses being circumferentially arranged at a predetermined angular intervals, characterized in that:
said permanent magnet pieces are held in said recesses in such a manner, that an upper part of said each permanent magnet piece is situated above the outer cylindrical circumference of the rotor core; and
said gaps formed between said inclined side faces of said each permanent magnet piece and said inclined side faces of said each recess are supplied with adhesive material to form wedge-like layers of said adhesive material between said inclined side faces of said permanent magnet piece and said inclined side faces of said recess, said wedge-like layers of said adhesive firmly holding said permanent magnet piece in said recess to thereby prevent said permanent magnet piece from being separated from said rotor core.

Further in accordance with the present invention there is provided a
method of fabricating a rotor for a synchronous rotary machine, rotatably arranged inside a stator and provided with a substantially cylindrical rotor core having an outer circumference thereof to which a plurality of permanent magnet pieces are fixedly attached, comprising the steps of
forming said permanent magnet pieces in a substantially polygonal plate having flat, axially opposite end faces parallel to a plane perpendicular to the axis of rotation of said rotor, side faces each intersecting said opposite end faces, curved upper and lower surfaces having a curvature substantially in conformity with that of said outer circumference of said cylindrical rotor core, said lower surface being formed to have a width greater than said upper surface whereby said side faces connecting said upper and lower surfaces are inclined so as to diverge from each other toward said lower surface;
forming a plurality of dovetail-groove-like axial recesses in said outer circumference of said rotor core at a predetermined circumferential angular interval, each of said recesses having a cylindrical bottom surface and opposite inclined side surfaces diverging from each other toward said bottom surface so as to provide gaps between said inclined side faces of said recess and corresponding inclined side faces of said permanent magnet piece when said permanent magnet piece is disposed in said recess in such a manner that said lower surface thereof is radially fitted in said recess from outside;
injecting adhesive into said gaps formed between said inclined side faces of said recess and said corresponding inclined side faces of said permanent magnet piece after radially fitting said permanent magnet piece in said recess of said rotor core to fill said gaps with said adhesive; characterized by the steps of
putting said permanent magnet pieces in said recesses in such a manner, that an upper part of said each permanent magnet pieces is situated above the outer cylindrical circumference of the rotor core and hardening said adhesive filling set gaps to form wedge-like layers capable of restraining said each permanent magnet piece from being separated from said outer circumference of said rotor core.

### BRIEF DESCRIPTION OF THE DRAWINGS

The above and other objects, features and advantages of the present invention will become more apparent from the following description taken in connection with the accompanying drawings, in which:
Fig. 1A is a front view of a rotor for a synchronous machine, in a first embodiment according to the present invention;
Fig. 1B is a side view of the rotor for a synchronous machine, in the first embodiment according to the present invention;
Fig. 2 is an enlarged perspective view of assistance in explaining a procedure for putting permanent magnets on a rotor core included in the rotor in the first embodiment;
Fig. 3A is a fragmentary sectional view of an essential portion of the rotor in the first embodiment, showing the relation between a recess formed in the rotor core, a permanent magnet and wedging layer of an adhesive on the rotor in the first embodiment;
Fig. 3B is a fragmentary sectional view of an essential portion of a modification of the rotor in the first embodiment;
Fig. 3C is a fragmentary sectional view of an essential portion of another modification of the rotor in the first embodiment;
Fig. 4A is a front view of a rotor for a synchronous machine, in a second embodiment according to the present invention;
Fig. 4B is a side view of the rotor for synchronous machine, in the second embodiment;
Fig. 5 is an enlarged perspective view of assistance in explaining a procedure for putting a permanent magnet on a rotor core included in the rotor in the second embodiment;
Fig. 6A is a front view of a rotor for a synchronous rotating machine, in a third embodiment according to the present invention;
Fig. 6B is a side view of the rotor in the third embodiment;
Fig. 7 is an enlarged perspective view of assistance in explaining a procedure for putting a permanent magnet of a rotor core included in the rotor in the third embodiment;
Fig. 8 is a front view of a rotor in a fourth embodiment according to the present invention;
Fig. 9A is a front view of a conventional surface-mounted magnet type for a synchronous rotating machine;
Fig. 9B is a side view of the rotor of Fig. 9A;
Fig. 10 is a side view of another conventional surface-mounted magnet type rotor for a synchronous rotating machine; and
Fig. 11 is a front view of a third conventional surface-mounted magnet type rotor for a synchronous rotating machine.

### BEST MODE OF CARRYING OUT THE INVENTION

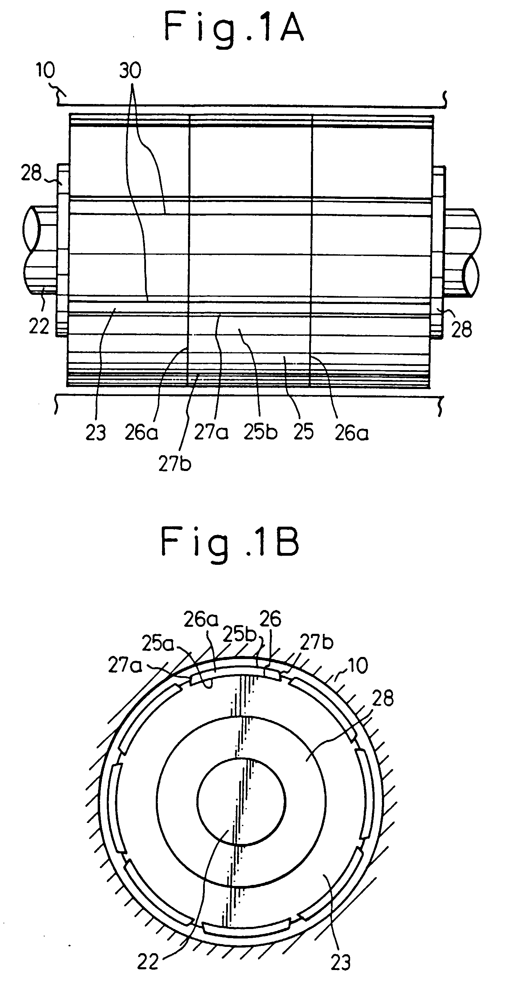

Referring to Figs. 1A and 1B, a rotor 20 for a synchronous rotary machine, in a first embodiment according to the present invention, similarly to the conventional rotor, is a motor element supported for rotation inside a stator 10 with a gap between the outer circumference thereof and the cylindrical inner circumference of the stator 10. The rotor 20 comprises a rotor shaft 22, a substantially cylindrical rotor core 23 adhesively fixed or fastened with a wedge to the rotor shaft 22, and a plurality of permanent magnets 25 fitted respectively in recesses 26 formed in the outer circumference of the rotor core 23.

Each of the permanent magnets 25 is formed in the shape of a curved piece of plate and has a lower surface 25a curved in a curvature corresponding to that of the outer circumference of the rotor core 23, an upper surface having a radially outward convex shape determined on the basis of design conditions determined taking into consideration conditions for magnetic interactions, axially opposite end faces 24 parallel to a plane perpendicular to the axis of rotation of the rotor 20, and opposite, inclined side faces 27a and 27b diverging from each other toward the lower surface 25a so as to extend opposite to the side faces of the recess 26 with gaps therebetween, respectively. In this embodiment, the inclined side faces 27a and 27b extend perpendicularly to the opposite end faces 24.

The rotor 20, similarly to the conventional rotor, is provided with end plates 28 attached to the axially opposite ends of the rotor core 23.

In the rotor 20, each permanent magnet 25 is attached to the rotor core 23 by adhesively joining the lower surface 25a thereof to the bottom surface of the recess 26, adhesively joining the inclined side faces 27a and 27b thereof to the side faces of the recess 26 facing thereto with an adhesive and hardening the adhesive filling up gaps between the inclined side faces 27a and 27b and the side faces of the recess 26 in wedge-like layers 30 of the adhesive. Therefore, the wedge effect of the wedge-like layers 30 of adhesive holds each permanent magnet 25 securely in a recess 26 so that each permanent magnet 25 will not be separated from the rotor core 23 by the resultant of centrifugal force that acts radially outward on the permanent magnet when the rotor 20 is rotated at a high rotating speed and radial magnetic attraction resulting from interactions of a rotating magnetic field created by the stator 10, and each permanent magnet 25.

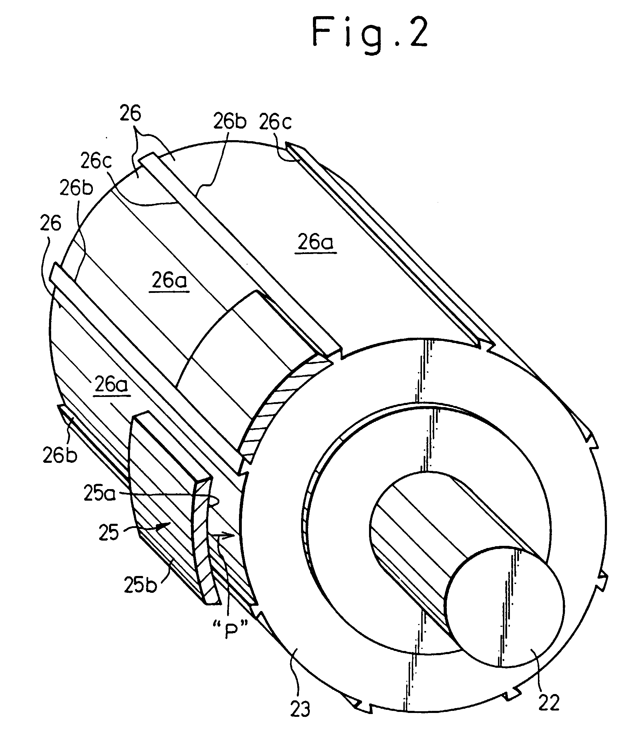

The recess 26 of the rotor core 23, the construction of each permanent magnet 25, and a procedure for assembling the permanent magnet 25 and the rotor core 23 when fabricating the rotor shown in Figs. 1A and 1B will be described hereinafter with reference to Fig. 2.

Referring to Fig. 2, the plurality of recesses (eight recesses in this embodiment) 26 are extended straight in the outer circumference of the rotor core 23 along the axis of the rotor core 23 and arranged at angular intervals. Each recess 26 is a dovetail groove expanding radially inward and having a curved bottom surface 26a having the shape of an arc of a circle, and opposite, inclined side faces 26b and 26c diverging from each other radially inward. As mentioned above, the inclined side faces 26b and 26c are complementary respectively to the inclined side faces 27a and 27b of the permanent magnet 25, and the inclined side faces are the opposite side faces of a dovetail groove that enables the permanent magnet 25 to be advanced radially toward the bottom surface 26a of the recess 26 of the rotor core 23 as indicated by the arrow P in Fig. 2 when fitting the permanent magnet 25 in the recess 26 and forms minute gaps between the inclined side faces 27a and 27b of the permanent magnet 25 and the corresponding inclined side faces 26b and 26c of the recess 26 to enable the permanent magnet 25 to be removed from the recess 26 when the permanent magnet 25 is pulled radially outward in a direction opposite the direction of the arrow P. When fitting the permanent magnet 25 in the recess 26, the lower surface 25a and the inclined side faces 27a and 27b thereof are coated with an adhesive. When the permanent magnet 25 is seated on the bottom surface 26a of the recess 26, the minute gaps are substantially fully filled up with the adhesive. The adhesive filling the minute gaps is hardened to form the wedge-like layers 30.

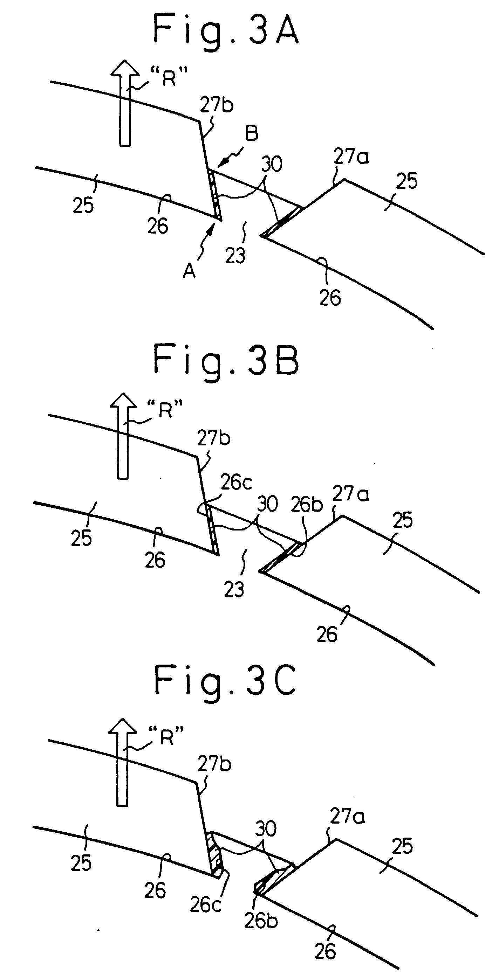

As shown in Fig. 3A, since the minute gaps between the inclined side faces 27a and 27b of the permanent magnet 25 and the corresponding inclined side faces 26b and 26c of the recess 26 of the rotor core 23 are filled up respectively with the wedge-like layers 30 of the hardened adhesive, the strong, mechanical wedging effects of the wedge-like layers 30 make impossible the removal of the permanent magnet 25 from the recess 26 even if a force tending to separate the permanent magnet 25 from the rotor core 23 acts in the direction of the arrow R opposite the direction of the arrow P, unless the wedge-like layers 30 are crushed. It is preferable to design the dimensional relation between the permanent magnet 25 and the recess 26 so that the distance between the edges A along which the inclined side faces 27a and 27b of the permanent magnet 25 intersect the lower surface 25a of the same, respectively, is slightly smaller than the distance between the edges B of the recess 26, and the edges A of the permanent magnet 25 graze the edges B of the recess 26 when the wedge-like layers 30 are not formed and permanent magnet 25 is pulled in the direction of the arrow R. When the permanent magnet 25 and the recess 26 are formed so as to meet such a dimensional relation, the wedge-like layers 30 exert the wedging effect on the permanent magnet 25 even if a large separating force resulting from the centrifugal force generated by the rotation of the rotor and the magnetic attraction acts on the permanent magnet and a large compressive force acts accordingly on the wedge-like layers 30 of adhesive, unless the wedge-like layers 30 are crushed completely and pushed completely out of the gaps. Thus, the wedging effect of the wedge-like layers 30 restrains the permanent magnet from being separated from the rotor core 23.

In a modification shown in Fig. 3B, the inclination of the inclined side faces 27a and 27b of the permanent magnet 25 and the inclination of the corresponding inclined side faces 26b and 26c of the recess 26 of the rotor core 23 are greater than those of the permanent magnet 25 and the recess 26 shown in Fig. 3A to enhance the wedging effect of the wedge-like layers 30 of the adhesive.

In another modification shown in Fig. 3C, the wedging effect of the wedge-like layers 30 of the adhesive on restraining the permanent magnet 25 from being separated from the rotor core 23 is enhanced by partially recessing the inclined side faces 26b and 26c of the recess 26 of the rotor core 23 to increase the thickness of the wedge-like layers 30 of the adhesive.

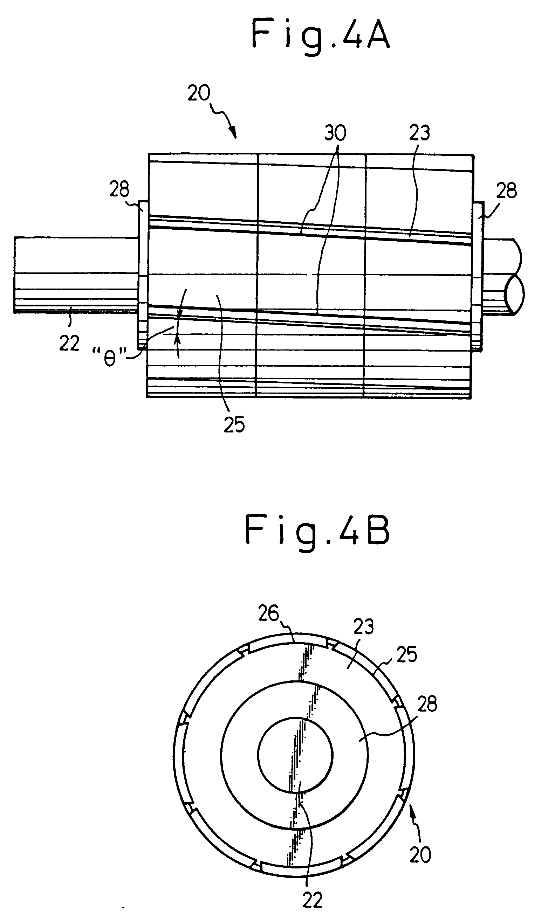

Fig. 4 shows a rotor 20 for a synchronous rotary machine, in a second embodiment according to the present invention. The rotor 20 in the second embodiment differs from the rotor 20 in the first embodiment in that recesses 26 are formed in the circumference of a rotor core 23 so as to extend at a fixed helix angle θ. However, the rotor 20 in the second embodiment is similar to the rotor 20 in the first embodiment in that the recesses 26 are formed substantially straight along the axis of rotation in the outer circumference of the rotor core 23, the recesses 26 are arranged at angular intervals, and the recesses 26 have the shape of a dovetail groove expanding radially inward. The opposite, inclined side faces 27a and 27b of each permanent magnet 25 to be radially fitted in the recesses 26 like tiling a surface are formed so as to extend at a helix angle θ. Naturally, the inclined side faces 27a and 27b, similarly to those of the first embodiment, are coated with an adhesive, and wedge-like layers 30 are formed to secure the permanent magnet 25 firmly in the recess 26 to restrain the permanent magnet 25 from being separated from the rotor core 23.

In the second embodiment, as is generally known, the permanent magnets 25 are arranged on the rotor core 23 in an axially skew arrangement skewing at a helix angle θ to the axis of the rotor core 23 to suppress torque ripple attributable to slots formed in the inner circumference of the stator 10 to hold coils therein. In assembling this surface-mounted magnet type rotor 20, the permanent magnets 25 can be radially fitted in the recesses 26 like tiling a surface. The wedging layers 30 formed by filling up the gaps between the inclined side faces of the permanent magnets 25 and the inclined side faces of the recesses 26 and hardening the adhesive filling up the gaps, similarly to those of the first embodiment, hold the permanent magnets 25 in the recesses 26 so that the permanent magnets 25 will not be separated from the rotor core 23.

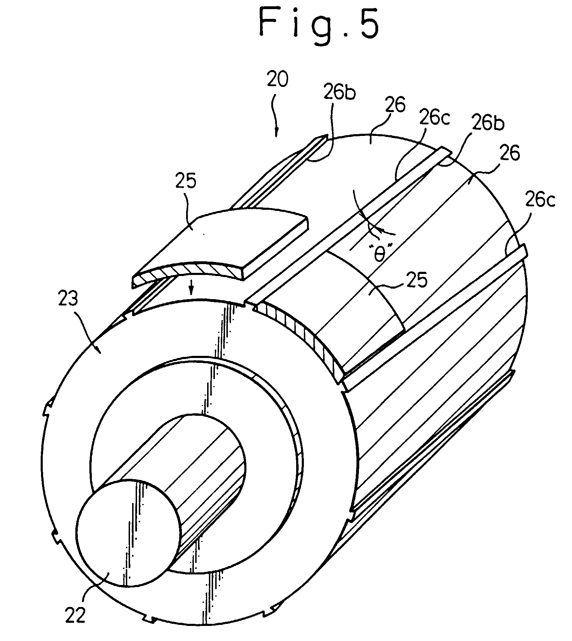

Fig. 5 is a perspective view of the rotor core 23 provided with the recesses 26 skewed at a helix angle θ to the axis of rotation of the rotor core 23.

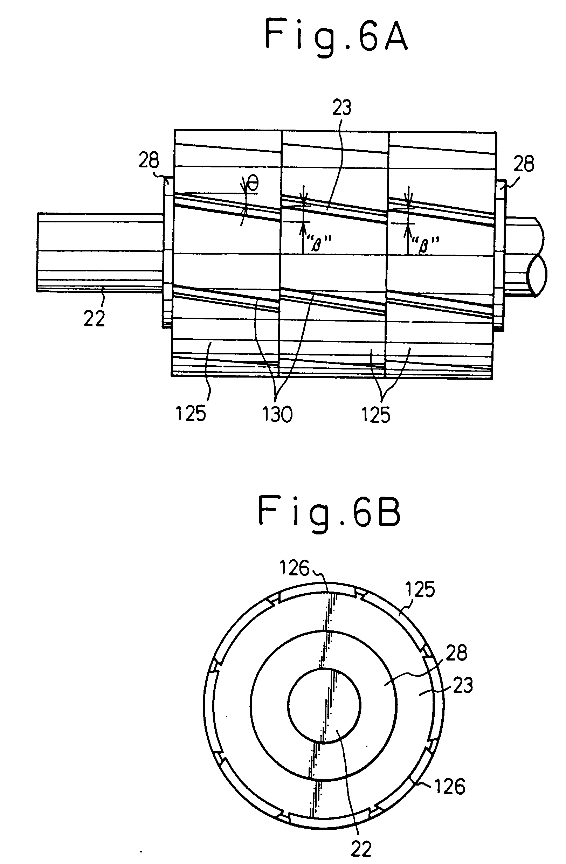

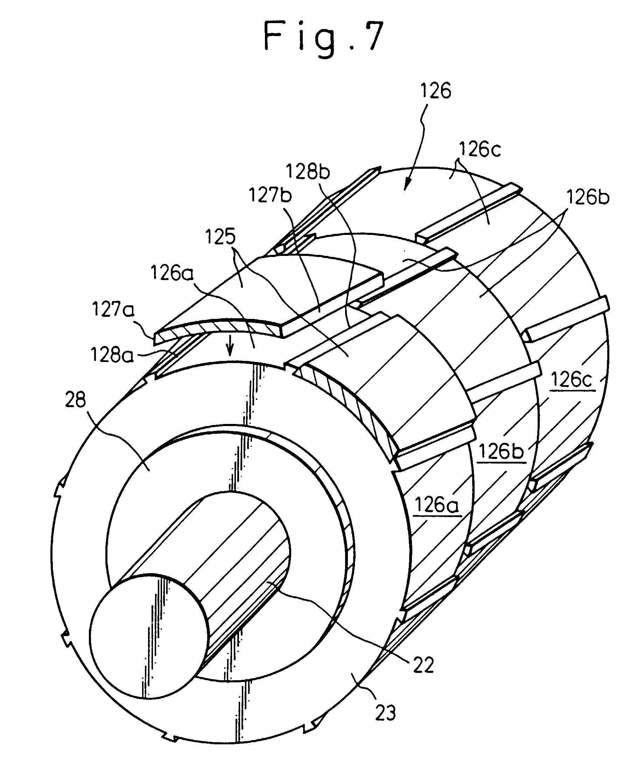

Figs. 6 and 7 show a rotor for a synchronous rotary machine, in a third embodiment according to the present invention.

As shown in Figs. 6 and 7, recesses 126 are formed in a plurality of axial recess divisions (three recess divisions in this embodiment) 126a to 126c of a short axial length. The recesses 126 in each of the recess divisions 126a, 126b and 126c, similarly to the recesses in the second embodiment, are arranged in a skew arrangement skewing at a helix angle θ to the axis of rotation of the rotor 20 and have the shape of a dovetail groove. However, the phase angles of the respective recesses 126 of the adjacent recess groups, i.e., the recess division 126a and 126b, and the recess divisions 126b and 126c, have a fixed phase angle difference β to provide permanent magnets 125 fitted in the respective recesses of the recess divisions 126a, 126b and 126c, with a torque ripple suppressing effect. Naturally, as is generally known, the phase angle difference β is determined taking into consideration the degree of the torque ripple included in the torque produced by the magnetic interaction of a rotating magnetic field created by the stator and the permanent magnets 125.

As shown in Fig. 7, when assembling the permanent magnets 125 and the rotor core 23, the permanent magnets 125 can be radially fitted in the recesses 126 of the recess divisions 126a, 126b and 126c like tiling a surface. Accordingly, the permanent magnets 125 can be radially fitted in the recesses 126 of the recess divisions 126a, 126b and 126c in the direction of the arrow P like tiling a surface even though the phases of the respective recesses 126 of the adjacent recess 126a, 126b and 126c are shifted relative to each other by the phase angle difference β, which is impossible in assembling the conventional rotor in which the permanent magnets are inserted axially in the recesses.

Naturally, the adhesive filling up gaps between the inclined side faces 127a and 127b of each permanent magnet 125 and the corresponding inclined side faces 128a and 128b of each of the recesses 126 of the recess divisions 126a to 126c forms wedge-like layers 130 (Fig. 6) when hardened, and the strong wedging function of the wedge-like layers 130 restrains the permanent magnets 125 from being separated from the rotor core 23 by the centrifugal force generated by the rotation of the rotor 20 and the magnetic attraction.

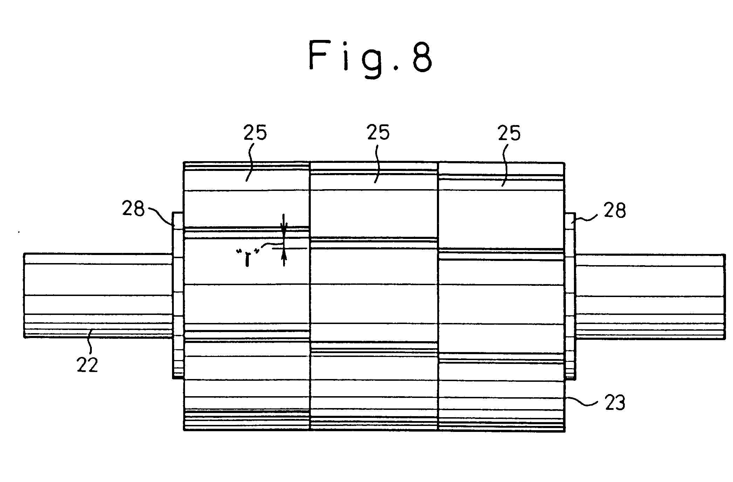

The effect of the arrangement of the permanent magnets 125 in the third embodiment, in which the phase of the recesses 126 of each of the recess divisions 126a, 126b and 126c are shifted by the phase angle difference β relative to that of the recesses 126 of the adjacent recess divisions, on the suppression of torque ripple can be produced, for example, by dividing the axial recesses 26 of the rotor core 23 in the first embodiment into sectional axial recesses, dividing the sectional axial recesses into a plurality of axial recess divisions and shifting the phase of the sectional axial recesses of each of the plurality of axial recess divisions relative to that of the sectional axial recesses of the adjacent axial recess divisions by a phase angle difference γ. A rotor provided with permanent magnets arranged in such an arrangement is shown in Fig. 8.

In an embodiment shown in Fig. 8, axial recesses 26 are divided into sectional axial recesses of the three axial recess divisions, and the phase of the sectional axial recesses of each axial recess division is shifted by a phase angle difference γ relative to that of the sectional axial recess of the adjacent axial recess divisions. Although the sectional axial recesses 26 are shifted relative to each other with respect to the circumferential direction, naturally, the permanent magnets 25 can be radially fitted in the sectional axial recesses 26 like tiling a surface similarly to those of the foregoing embodiments.

The permanent magnets employed in the foregoing embodiments have quadrilateral shapes, respectively, in a plan view. It will be easily understood by a person with ordinary skill in the art to which the present invention pertains that the permanent magnets may be of any suitable polygonal shape, such as the octagonal permanent magnets employed in the conventional rotor for a synchronous motor, provided that each permanent magnet has side surfaces that are able to form spaces for forming wedge-like layers therein by filling up the spaces with an adhesive and hardening the adhesive filling up the spaces together with the corresponding side faces of a recess when the permanent magnet is fitted radially in the recess like tiling a surface. Accordingly, permanent magnets applicable to the rotor of the present invention are not limited to the foregoing quadrilateral permanent magnets.

As is apparent from the description of the foregoing embodiments, according to the present invention, a rotor for a synchronous rotary machine, particularly, a surface-mounted magnet type rotor comprising a substantially cylindrical rotor core and permanent magnets attached to the outer circumference of the rotor core, has a construction that enables the assembly of the rotor core and the permanent magnets by radially fitting the permanent magnets in recesses resembling a dovetail groove like tiling a surface, and wedge-like layers of adhesive formed by filling up spaces formed between the side faces of the permanent magnet and the corresponding side faces of the recess and hardening the adhesive filling up the spaces, restrains the permanent magnets from being separated from the rotor core by the centrifugal force generated by the rotation of the rotor and the magnetic attraction, highly effectively. Thus, the construction of the rotor of the present invention enhances the mechanical permanent magnet anchoring force against the force tending to separate the surface-mounted permanent magnets from the rotor core remarkably and the life and reliability of the synchronous rotary machine incorporating the rotor of the present invention are improved accordingly.

Furthermore, even if the permanent magnets of the rotor are arranged in a skew arrangement or in an offset arrangement, in which the phase of the permanent magnets fitted in the recesses of one of a plurality of recess divisions is shifted relative to that of the permanent magnets fitted in the recesses of the adjacent recess divisions, on the outer circumference of the rotor core of the rotor, the permanent magnets can be attached to the outer circumference of the rotor core by radially fitting the permanent magnets in the recesses when assembling the rotor. Thus, the rotor of the present invention can be assembled by a rotor assembling method that does not require any work in addition to that required by the rotor assembling method for assembling the conventional surface-mounted magnet type rotor and is rather simpler than the rotor assembling method for assembling the conventional surface-mounted magnet type rotor.

Modifications and variations may occur within the scope of the appended claims.

## Claims

1. A rotor (20) for a synchronous rotary machine, supported for a rotation inside a stator (10) and provided with a substantially cylindrical rotor core (23) having an outer circumference thereof to which a plurality of pieces of permanent magnet pieces (25) are fixedly attached, wherein
each of said permanent magnet pieces (25) is formed in a polygonal shape piece having flat, axially opposite end faces (24) parallel to a plane perpendicular to the axis of rotation of said rotor (20), side faces (27a,27b) each intersecting the opposite end faces (24), curved upper and lower surfaces (25a,25b) formed so as to have a curvature substantially in conformity with that of said outer circumference of said cylindrical rotor core (23), said lower surface (25a) having a width greater than that of said upper surface (25b) so that said side faces (27a,27b) connecting said upper and lower surfaces (25a,25b) are inclined so as to diverge from each other toward said lower surface (25a),
wherein said cylindrical rotor core (23) is provided with a surface thereof formed with a plurality of substantially dovetail-groove-like recesses (26) each having an axially and cylindrically extending bottom surface (26a) and opposite inclined side faces (26b,26c) diverging from each other toward said bottom surface (26a) so that gaps are formed between said inclined side faces (26b,26c) of said recess (26) and said inclined side faces (27a,27b) of said permanent magnet piece (25) when said lower surface (25a) of said permanent magnet piece (25) is radially fitted in said recess (26) said plurality of dovetail-groove-like recesses (26) being circumferentially arranged at a predetermined angular intervals, characterized in that:
said permanent magnet pieces (25) are held in said recesses (26) in such a manner, that an upper part of said each permanent magnet piece (25) is situated above the outer cylindrical circumference of the rotor core (23); and
said gaps formed between said inclined side faces (27a, 27b) of said each permanent magnet piece (25) and said inclined side faces (26b,26c) of said each recess (26) are supplied with adhesive material to form wedge-like layers (30) of said adhesive material between said inclined side faces (27a,27b) of said permanent magnet piece (25) and said inclined side faces (26b,26c) of said recess (26), said wedge-like layers (30) of said adhesive firmly holding said permanent magnet piece (25) in said recess (26) to thereby prevent said permanent magnet piece (25) from being separated from said rotor core (23).

2. A rotor (20) for a synchronous rotary machine, according to claim 1, wherein each of said plurality of dovetail-groove-like recesses (26) of said rotor core (23) is a straight groove extending in parallel to the axis of rotation of said rotor (20), and wherein at least one of said permanent magnet pieces (25) is disposed in each said straight groove.

3. A rotor (20) for a synchronous rotary machine, according to claim 1, wherein each of said dovetailgroove-like recesses (26) of said rotor core (23) is a straight groove extending at a diagonal angle (θ) with respect to the axis of rotation of said rotor (20), and wherein a plurality of said permanent magnet pieces (25) are disposed in said each diagonally extending straight groove.

4. A rotor (20) for a synchronous rotary machine, according to claim 1, wherein each of said plurality of dovetail-groove-like recesses (26) of said rotor core (23) includes a plurality of divided straight recesses (126a,126b,126c), each having a predetermined length extending at a predetermined diagonal angle (θ) with respect to the axis of rotation of said rotor (20), said plurality of divided straight recesses (126a,126b, 126c) being circumferentially shifted relative to each other by a predetermined angle (β), and wherein a plurality of said permanent magnet pieces (25) are disposed respectively in said plurality of divided straight recesses (126a,126b,126c) of each said dovetail-groove-like recess (26).

5. A rotor (20) for a synchronous rotary machine, according to claim 1, wherein each of said plurality of dovetail-groove-like recesses (26) of said rotor core (23) includes a plurality of divided straight recesses (26) having a predetermined length extending in parallel to the axis of rotation of said rotor (20), said plurality of divided straight recesses (26) being circumferentially shifted relative to each other by a predetermined angle (γ), and wherein a plurality of the permanent magnet pieces (25) are disposed respectively in said plurality of divided straight recesses (26) of each said dovetail-groove-like recess (26).

6. A method of fabricating a rotor (20) for a synchronous rotary machine, rotatably arranged inside a stator (10) and provided with a substantially cylindrical rotor core (23) having an outer circumference thereof to which a plurality of permanent magnet pieces (25) are fixedly attached, comprising the steps of
forming said permanent magnet pieces (25) in a substantially polygonal plate having flat, axially opposite end faces (24) parallel to a plane perpendicular to the axis of rotation of said rotor (20), side faces (27a,27b) each intersecting said opposite end faces (24), curved upper and lower surfaces (25a,25b) having a curvature substantially in conformity with that of said outer circumference of said cylindrical rotor core (23), said lower surface (25a) being formed to have a width greater than said upper surface (25b) whereby said side faces (27a,27b) connecting said upper and lower surfaces (25a,25b) are inclined so as to diverge from each other toward said lower surface (25a);
forming a plurality of dovetail-groove-like axial recesses (26) in said outer circumference of said rotor core (23) at a predetermined circumferential angular interval, each of said recesses (26) having a cylindrical bottom surface (26a) and opposite inclined side surfaces (26a,26b) diverging from each other toward said bottom surface (26a) so as to provide gaps between said inclined side faces (26a,26b) of said recess (26) and corresponding inclined side faces (27a,27b) of said permanent magnet piece (25) when said permanent magnet piece (25) is disposed in said recess (26) in such a manner that said lower surface (25a) thereof is radially fitted in said recess (26) from outside;
injecting adhesive into said gaps formed between said inclined side faces (26a,26b) of said recess (26) and said corresponding inclined side faces (27a,27b) of said permanent magnet piece (25) after radially fitting said permanent magnet piece (25) in said recess (26) of said rotor core (23) to fill said gaps with said adhesive; characterized by the steps of
putting said permanent magnet pieces (25) in said recesses (26) in such a manner, that an upper part of said each permanent magnet pieces (25) is situated above the outer cylindrical circumference of the rotor core (23) and hardening said adhesive filling set gaps to form wedge-like layers (30) capable of restraining said each permanent magnet piece (25) from being separated from said outer circumference of said rotor core (23).

7. A method of fabricating a rotor (20) for a synchronous rotary machine, according to claim 6, wherein said lower surface (25a) of said each permanent magnet (25) is coated with adhesive to form a film-like layer of adhesive between said lower surface (25a) of said each permanent magnet piece (25) and said bottom surface (26a) of said recess (26) of said rotor core (23), and said film like layer of adhesive is hardened to form a hard adhesive layer between said lower surface (25a) of said each permanent magnet piece (25) and said bottom surface (26a) of said recess (26).

## Patentansprüche

1. Rotor (20) für eine Synchronmaschine, der drehbar innerhalb eines Stators (10) gelagert ist und einen im wesentlichen zylindrischen Rotorkern aufweist, mit einer äußeren Umfangsfläche, an der eine Vielzahl von Permanentmagnetstücken befestigt ist, wobei
jedes der Permanentmagnetstücke (25) eine polygonale Gestalt aufweist mit ebenen, axial entgegengesetzten Endflächen (24), parallel zu einer Ebene senkrecht zu der Drehachse des Rotors (20), mit Seitenflächen (27a, 27b), deren jede die entgegengesetzten Endflächen (24) schneiden, mit gekrümmten oberen und unteren Oberflächen (25a, 25b), die so ausgebildet sind, daß sie eine Krümmung aufweisen, die im wesentlichen übereinstimmt mit derjenigen der äußeren Umfangsfläche des zylindrischen Rotorkerns (23), wobei die untere Oberfläche (25a) eine größere Breite aufweist als die obere Oberfläche (25b), so daß die Seitenflächen (27a, 27b), welche die obere und untere Oberfläche (25a, 25b) verbinden, geneigt sind, derart, daß sie zu der unteren Oberfläche (25a) hin divergieren,
wobei der zylindrische Rotorkern (23) mit einer Oberfläche versehen ist, die mit einer Vielzahl von im wesentlichen schwalbenschwanzförmigen Vertiefungen (26) ausgebildet ist, deren jede eine axiale und zylindrisch sich erstreckende Bodenfläche (26a) und einander gegenüberliegende geneigte Seitenflächen (26b, 26c) aufweist, welche hin zu der Bodenfläche (26a) divergieren, derart, daß Zwischenräume gebildet werden zwischen den geneigten Seitenflächen (26b, 26c) der Vertiefung (26) und den geneigten Seitenflächen (27a, 27b) der Permanentmagnetstücke (25), wenn die untere Oberfläche (25a) des Permanentmagnetstücks (25) radial in die Vertiefung (26) eingesetzt ist, wobei die Vielzahl der schwalbenschwanzförmigen Vertiefungen (26) in Umfangsrichtung in vorgegebenen Winkelintervallen angeordnet sind,
dadurch gekennzeichnet, daß:
die Permanentmagnetstücke (25) derart in den Vertiefungen (26) gehalten sind, daß ein oberer Bereich jedes Permanentmagnetstücks (25) oberhalb der oberen zylindrischen Umfangsfläche des Rotorkerns (23) angeordnet ist; und
daß die zwischen den geneigten Seitenflächen (27a, 27b) jedes Permanentmagnetstücks (25) und den geneigten Seitenflächen (26b, 26c) jeder Vertiefung (26) gebildeten Zwischenräume mit einem Klebematerial versehen sind zur Ausbildung von keilförmigen Schichten (30) des Klebematerials zwischen den geneigten Seitenflächen (27a, 27b) des Permanentmaggnetstücks (25) und den geneigten Seitenflächen (26b, 26c) der Vertiefungen (26), so daß die keilförmigen Schichten (30) des Klebstoffs das Permanentmagnetstück (25) sicher in der Vertiefung (26) halten, um hierdurch eine Ablösung des Permanentmagnetstücks (25) von dem Rotorkern (23) zu verhindern.

2. Rotor (20) für eine Synchronmaschine nach Anspruch 1, bei dem jede der Vielzahl von schwalbenschwanzförmigen Vertiefungen (26) des Rotorkerns (23) eine sich durchgängig parallel zu der Drehachse des Rotors (20) erstreckende Nut ist, und bei dem wenigstens eines der Permanentmagnetstücke (25) in diese durchgängige Nut eingesetzt ist.

3. Rotor (20) für eine Synchronmaschine nach Anspruch 1, bei dem die schwalbenschwanzförmige Vertiefung (26) des Rotorkerns (23) eine sich durchgängig unter einem diagonalen Winkel (θ) in bezug auf die Drehachse des Rotors (20) erstrekkende Nut ist, und bei dem eine Vielzahl der Permanentmagnetstücke (25) in die diagonal sich erstreckende durchgängige Nut eingesetzt sind.

4. Rotor (20) für eine Synchronmaschine nach Anspruch 1, bei dem jede der Vielzahl der schwalbenschwanzförmigen Vertiefungen (26) des Rotorkerns (23) eine Vielzahl von geraden Vertiefungen (126a, 126b, 126c) aufweist, deren jede eine vorbestimmte Länge entlang eines vorgegebenen diagonalen Winkels (θ) in bezug auf die Drehachse des Rotors (20) aufweist, wobei die Vielzahl der unterteilten geraden Vertiefungen (126a, 126b, 126c) in Umfangsrichtung relativ zueinander um einen vorgegebenen Winkel (β) versetzt sind, und bei dem eine Vielzahl der Permanentmagnetstücke (25) jeweils in die Vielzahl der unterteilten geraden Vertiefungen (126a, 126b, 126c) der schwalbenschwanzförmigen Vertiefung (126) eingefügt sind.

5. Rotor (20) für eine Synchronmaschine nach Anspruch 1, bei dem jeder der Vielzahl von schwalbenschwanzförmigen Vertiefungen (126) des Rotorkerns (23) eine Vielzahl von unterteilten geraden Vertiefungen (26) einschließt, die sich mit einer vorgegebenen Länge parallel zur Drehachse des Rotors (20) erstrecken, wobei die Vielzahl der unterteilten geraden Vertiefungen (26) in Umfangsrichtung relativ zueinander unter einem vorgegebenen Winkel (γ) versetzt sind, und bei dem eine Vielzahl der Permanentmagnetstücke (25) jeweils in die Vielzahl der unterteilten geraden Vertiefungen (26) jeder schwalbenschwanzförmigen Vertiefung (26) eingefügt sind.

6. Verfahren zur Herstellung eines Rotors (20) für eine Synchronmaschine, der drehbar innerhalb eines Stators (10) gelagert ist und einen im wesentlichen zylindrischen Rotorkern aufweist, mit einer äußeren Umfangsfläche, an der eine Vielzahl von Permanentmagnetstücken befestigt ist, umfassend die Schritte:
Ausbildung der Permanentmagnetstücke (25) als im wesentlichen polygonale Platte mit ebenen, axial entgegengesetzten Endflächen (24), parallel zu einer Ebene senkrecht zu der Drehachse des Rotors (20), mit Seitenflächen (27a, 27b), deren jede die entgegengesetzten Endflächen (24) schneiden, mit gekrümmten oberen und unteren Oberflächen (25a, 25b), die so ausgebildet sind, daß sie eine Krümmung aufweisen, die im wesentlichen übereinstimmt mit derjenigen der äußeren Umfangsfläche des zylindrischen Rotorkerns (23), wobei die untere Oberfläche (25a) eine größere Breite aufweist als die obere Oberfläche (25b), so daß die Seitenflächen (27a, 27b), welche die obere und untere Oberfläche (25a, 25b) verbinden, geneigt sind, derart, daß sie zu der unteren Oberfläche (25a) hin divergieren,
Ausbilden einer Vielzahl von schwalbenschwanzförmigen Vertiefungen (26) in der äußeren Umfangsfläche des Rotorkerns in einem vorgegebenen Winkelintervall in Umfangsrichtung, deren jede eine axiale und zylindrisch sich erstreckende Bodenfläche (26a) und einander gegenüberliegende geneigte Seitenflächen (26b, 26c) aufweist, welche hin zu der Bodenfläche (26a) divergieren, derart, daß Zwischenräume gebildet werden zwischen den geneigten Seitenflächen (26b, 26c) der Vertiefung (26) und den geneigten Seitenflächen (27a, 27b) der Permanentmagnetstücke (25), wenn die untere Oberfläche (25a) des Permanentmagnetstücks (25) radial in die Vertiefung (26) eingesetzt ist,
Einspritzen eines Klebstoffs in die Zwischräume, die zwischen den geneigten Seitenflächen (26a, 26b) der Vertiefungen (26) und den mit diesen korrespondierenden geneigten Seitenflächen (27a, 27b) der Permanentmagnetstücke (25) ausgebildet sind, nachdem die Permanentmagnetstücke (25) radial in die Vertiefungen (26) des Rotorkerns (23) eingefügt wurden, um die Zwischenräume mit dem Klebstoff zu füllen,
gekennzeichnet durch die Schritte:
Einfügen der Permanentmagnetstücke (25) in die Vertiefung (26) derart, daß ein oberer Teil der Permanentmagnetstücke (25) oberhalb der äußeren zylindrischen Umfangsfläche des Rotorkerns (23) angeordnet ist und Härten der mit Klebstoff gefüllten Zwischenräume zur Ausbildung von keilförmigen Schichten (30), die eine Ablösung der Permanentmagnetstücke (25) von der äußeren Umfangsfläche des Rotorkerns (23) verhindern.

7. Verfahren nach Anspruch 6, bei dem die untere Oberfläche (25a) des Permanentmagneten (25) mit einem Klebstoff beschichtet ist, um eine filmartige Schicht des Klebstoffs zwischen der unteren Oberfläche (25a) des Permanentmagnetstücks (25) und der Bodenfläche (26a) der Vertiefung (26) des Rotorkerns (23) auszubilden, und bei dem die filmartige Klebstoffschicht gehärtet ist, um eine harte Klebstoffschicht zwischen der unteren Oberfläche (25a) des Permanentmagnetstücks (25) und der Bodenfläche (26a) der Vertiefung (26) auszubilden.

## Revendications

1. Rotor (20) pour machine rotative synchrone, monté pour tourner à l'intérieur d'un stator (10) et muni d'un noyau de rotor essentiellement cylindrique (23) comportant sur sa circonférence extérieure un certain nombre de pièces d'aimants permanents (25) fixées sur cette circonférence extérieure,
dans lequel chacune des pièces d'aimants permanents (25) est réalisée sous la forme d'une pièce polygonale comportant des faces d'extrémité plates axialement opposées (24) parallèles à un plan perpendiculaire à l'axe de rotation du rotor (20), des faces latérales (27a, 27b) coupant chacune les faces d'extrémité opposées (24), des surfaces supérieure et inférieure courbes (25a, 25b) réalisées de manière à présenter une courbure se conformant essentiellement à la courbure de la circonférence extérieure du noyau de rotor cylindrique (23), la surface inférieure (25a) présentant une plus grande largeur que celle de la surface supérieure (25b) de façon que les faces latérales (27a, 27b) reliant les surfaces supérieure et inférieure (25a, 25b) soient inclinées de manière à diverger l'une par rapport à l'autre en direction de la surface inférieure (25a),
dans lequel le noyau de rotor cylindrique (23) est muni, sur sa surface, d'un certain nombre d'évidements essentiellement en forme de rainures en queue d'aronde (26), comportant chacun une surface de fond s'étendant axialement et cylindriquement (26a), et des faces latérales inclinées opposées (26b, 26c) divergeant l'une par rapport à l'autre en direction de la surface de fond (26a), de façon que des intervalles soient formés entre les faces latérales inclinées (26b, 26c) de l'évidement (26) et les faces latérales inclinées (27a, 27b) de la pièce d'aimant permanent (25) lorsque la surface inférieure (25a) de la pièce d'aimant permanent (25) est adaptée radialement dans l'évident (26), la pluralité d'évidements en forme de rainures en queue d'aronde (26) étant disposés circonférentiellement à des intervalles angulaires prédéterminés,
caractérisé en ce que
les pièces d'aimants permanents (25) sont maintenues dans les évidements (26) de telle manière que la partie supérieure de chaque pièce d'aimant permanent (25) est située au-dessus de la circonférence cylindrique extérieure du noyau de rotor (23) ; et
les intervalles formés entre les faces latérales inclinées (27a, 27b) de chaque pièce d'aimant permanent (25) et les faces latérales inclinées (26b, 26c) de chaque évidement (26), sont remplis d'un matériau de colle pour former des couches en forme de cales (30) du matériau de colle entre les faces latérales inclinées (27a, 7b) de la pièce d'aimant permanent (25), et les faces latérales inclinées (26b, 26c) de l'évidement (26), les couches en forme de cales (30) de la colle maintenant solidement la pièce d'aimant permanent (25) dans l'évidement (26) pour empêcher ainsi cette pièce d'aimant permanent (25) d'être séparée du noyau de rotor (23).

2. Rotor (20) pour machine rotative synchrone, selon la revendication 1,
dans lequel
chacun de la pluralité des évidements en forme de rainures en queue d'aronde (26) du noyau de rotor (23) est une rainure droite s'étendant parallèlement à l'axe de rotation du rotor (20), et dans lequel l'une au moins des pièces d'aimants permanents (25) est disposée dans chacune des rainures droites.

3. Rotor (20) pour machine rotative synchrone, selon la revendication 1,
dans lequel
chacun des évidements en forme de rainures en queue d'aronde (26) du noyau de rotor (23) est une rainure droite s'étendant sous un angle diagonal (θ) par rapport à l'axe de rotation du rotor (20), et dans lequel une pluralité des pièces d'aimants permanents (25) sont disposées dans chaque rainure droite s'étendant diagonalement.

4. Rotor (20) pour machine rotative synchrone, selon la revendication 1,
dans lequel
chacun de la pluralité des évidements en forme de rainures en queue d'aronde (26) du noyau de rotor (23) comprend une pluralité d'évidements droits divisés (126a, 126b, 126c) comportant chacun une longueur prédéterminée s'étendant sous un angle diagonal prédéterminé (θ) par rapport à l'axe de rotation du rotor (20), la pluralité d'évidements droits divisés (126a, 126b, 126c) étant décalés circonférentiellement les uns par rapport aux autres d'un angle prédéterminé (β), et dans lequel une pluralité des pièces d'aimants permanents (25) sont disposées respectivement dans la pluralité des évidements droits divisés (126a, 126b, 126c) de chacun des évidements en forme de rainures en queue d'aronde (26).

5. Rotor (20) pour machine rotative synchrone, selon la revendication 1,
dans lequel
chacun de la pluralité des évidements en forme de rainures en queue d'aronde (26) du noyau de rotor (23) comprend une pluralité d'évidements droits divisés (26) présentant une longueur prédéterminée s'étendant parallèlement à l'axe de rotation du rotor (20), la pluralité des évidements droits divisés (26) étant décalés circonférentiellement les uns par rapport aux autres d'un angle prédéterminé (γ), et dans lequel une pluralité des pièces d'aimants permanents (25) sont disposées respectivement dans la pluralité des évidements droits divisés (26) de chaque évidement en forme de rainure en queue d'aronde (26).

6. Procédé de fabrication d'un rotor (20) pour machine rotative synchrone, monté en rotation à l'intérieur d'un stator (10) et muni d'un noyau de rotor essentiellement cylindrique (23) comportant, sur sa circonférence extérieure, une pluralité de pièces d'aimants permanents (25) fixées à cette circonférence extérieure, comprenant les étapes consistant à :
- réaliser les pièces d'aimants permanents (25) sous la forme d'une plaque essentiellement polygonale comportant des faces d'extrémités plates axialement opposées (24) parallèles à un plan perpendiculaire à l'axe de rotation du rotor (20), des faces latérales (27a, 27b) coupant chacune des faces d'extrémités opposées (24), des surfaces courbes supérieure et inférieure (25a, 25b) ayant une courbure essentiellement en conformité avec celle de la circonférence extérieure du noyau de rotor cylindrique (23), la surface inférieure (25a) étant formée de manière à présenter une plus grande largeur que la surface supérieure (25b), de façon que les faces latérales (27a, 27b) reliant les surfaces supérieure et inférieure (25a, 25b), sont inclinées de manière à diverger l'une par rapport à l'autre en direction de la surface inférieure (25a) ;
- former une pluralité d'évidements axiaux en forme de rainures en queue d'aronde (26) dans la circonférence extérieure du noyau de rotor (23) à des intervalles angulaires circonférentiels prédéterminés, chacun des évidements (26) comportant une surface de fond cylindrique (26a) et des surfaces latérales inclinées opposées (26a, 26b) divergeant l'une par rapport à l'autre en direction de la surface de fond (26a) de manière à former des intervalles entre les faces latérales inclinées (26a, 26b) de l'évidement (26) et les faces latérales inclinées correspondantes (27a, 27b) de la pièce d'aimant permanent (25) lorsque cette pièce d'aimant permanent (25) est disposée dans l'évidement (26) de telle manière que sa surface inférieure (25a) s'adapte radialement, de l'extérieur, dans l'évidement (26) ;
- injecter de la colle dans les intervalles formés entre les faces latérales inclinées (26a, 26b) de l'évidement (26), et les faces latérales inclinées correspondantes (27a, 27b) de la pièce d'aimant permanent (25) après l'adaptation radiale de cette pièce d'aimant permanent (25) dans l'évidement (26) du noyau de rotor (23) pour remplir les intervalles par la colle ;
procédé caractérisé par
les étapes consistant à
- placer les pièces d'aimants permanents (25) dans les évidements (26) de telle manière que la partie supérieure de chaque pièce d'aimant permanent (25) est située au-dessus de la circonférence cylindrique extérieure du noyau de rotor (23), et
- faire durcir la colle remplissant les intervalles pour former des couches en forme de cales (30) capables d'empêcher chaque pièce d'aimant permanent (25) de se séparer de la circonférence extérieure du noyau de rotor (23).

7. Procédé de fabrication d'un rotor (20) pour une machine rotative synchrone, selon la revendication 6,
dans lequel
la surface inférieure (25a) de chaque aimant permanent (25) est revêtue de colle pour former une couche de colle en forme de film entre la surface inférieure (25a) de chaque pièce d'aimant permanent (25) et la surface de fond (26a) de l'évidement (26) du noyau de rotor (23), et la couche de colle en forme de film est durcie pour former une couche de colle dure entre la surface inférieure (25a) de chaque pièce d'aimant permanent (25) et la surface de fond (26a) de l'évidement (26).
